# EUROPÄISCHE PATENTSCHRIFT

(11) **EP 2 033 035 B1**
(45) Veröffentlichungstag und Bekanntmachung des Hinweises auf die Patenterteilung: **11.12.2013**
(21) Anmeldenummer: 06754308.2
(22) Anmeldetag: 12.06.2006
(51) Int. Cl.: B23K 26/42, H01S 3/04, B23K 26/14

(54) **Verfahren zur Herstellung einer korrosionsbeständigen Kunststoffbeschichtung eines Kanals in einem Bauteil einer Laserbearbeitungsmaschine und damit hergestelltes Bauteil einer Laserbearbeitungsmaschine**
Method for manufacturing a corrosion-resistant plastic coating of a channel in a component of a laser machining tool and thereby manufactured component of a laser machining tool
Procédé de fabrication d'un revêtement plastique anticorrosion d'un canal d'un composant d'une machine d'usinage laser et composant de la machine d'usinage laser ainsi fabriqué

(43) Veröffentlichungstag der Anmeldung: 11.03.2009
(73) Patentinhaber: TRUMPF Werkzeugmaschinen GmbH + Co. KG, 71254 Ditzingen (DE)
(72) Erfinder: ZEPF, Timo, 78606 Seitingen-Oberflacht (DE)
(74) Vertreter: Kohler Schmid Möbus
(86) Internationale Anmeldenummer: PCT/EP2006/005621
(87) Internationale Veröffentlichungsnummer: WO 2007/144009

(56) Entgegenhaltungen:
- EP-A- 1 359 198
- DE-A1- 10 102 969
- DE-A1- 19 955 574
- FR-A- 2 750 630
- JP-A- 1 207 702
- JP-A- 2002 164 594
- US-A1- 2003 207 145

## Beschreibung

Die Erfindung betrifft ein Verfahren zur Herstellung einer korrosionsbeständigen Kunststoffbeschichtung eines Kanals eines Bauteils einer Laserbearbeitungsmaschine, sowie auch das nach diesem Verfahren hergestellte Bauteil der Laserbearbeitungsmaschine.

Bauteile, beispielsweise Laserbearbeitungsköpfe, der eingangs genannten Art sind durch ihre Verwendung bei Laserschweißanlagen allgemein bekannt.

Bei Laserschweißköpfen wird kupferionisiertes Wasser zur Kühlung von Spiegeln aus Kupfer verwendet. Kupferionisiertes Wasser wird deshalb verwendet, damit die Kupferspiegel nicht korrodieren. Dieses kupferionisierte Wasser muss durch den Aluminiumkörper der vorgenannten Bauteile geführt werden. In der Regel wird Aluminium deshalb eingesetzt, weil es leicht und der Laserbearbeitungskopf meist ein bewegtes Bauteil ist. Außerdem ist Aluminium einfach zu bearbeiten und vergleichsweise kostengünstig. Nachteiligerweise korrodiert Aluminium durch den Kontakt mit diesem Wasser sehr stark. Dies gilt entsprechend auch für Aluminiumlegierungen.

Bisher erfolgt die Führung von kupferionisiertem Wasser durch sehr aufwändige und kostenintensive Leitungen aus Edelstahl oder Kupfer, die in den Aluminiumkörper des Schweißkopfes eingesetzt werden, oder durch Schlauchleitungen, die an dem Aluminiumkörper vorbei geführt werden. Dies hat aber den Nachteil, dass diese sehr leicht durch Streustrahlung des Lasers, durch Knickung oder durch Quetschung beschädigt werden können. Außerdem werden Kunststoffschläuche durch Alterung spröde und undicht.

Aus der DE 101 02 969 A1 ist die spannungslose Aufbringung von Nickel als korrosionsbeständige Beschichtung eines Kühlkanals eines Spiegels eines Lasersystems bekannt.

Die Verwendung eines Polymers oder Epoxidharzes als korrosionsbeständige Beschichtung für Aluminium ist beispielsweise aus der US 2003/207145 A1 und der EP 1 359 198 A bekannt.

Der Erfindung liegt die Aufgabe zu Grunde, ein alternatives Verfahren zur Herstellung einer korrosionsbeständigen Beschichtung eines Kanals eines Bauteils einer Laserbearbeitungsmaschine anzugeben.

Diese Aufgabe wird durch ein Verfahren gemäß Patentanspruch 1 gelöst. Weiterbildungen der Erfindung sind in den Unteransprüchen enthalten.

Die Erfindung zeichnet sich durch folgende Vorteile aus:

Bauteile aus Aluminium können mit dem aufgebrachten Korrosionsschutz (Epoxydharz) eloxiert werden, ohne dass die Beschichtung beim Eloxieren beschädigt wird. Epoxydharz eignet sich besonders gut, weil es temperaturbeständig, einfach zu handhaben und chemisch beständig ist. Es wird ein guter Schutz gegen Korrosion erzeugt. Es entsteht eine Gewichtsreduzierung gegenüber bisher eingesetzten Leitungen aus Edelstahl oder Kupfer. Störkonturen durch störende Schläuche oder andere Leitungen werden vermieden. Die Anzahl von Komponenten wird reduziert. Die Beschichtung weist eine hohe Temperaturbeständigkeit bis ca. 110°C in Abhängigkeit vom verwendeten Gießmaterial auf. Der Montageaufwand lässt sich durch Einsparung von Bauteilen reduzieren. Erfindungsgemäße Bauteile lassen sich ohne Sondermaschinen herstellen.

Die Absätze oder Sicken können ins Beschichtungsmaterial eingebracht werden. In Verbindung mit einem handelsüblichen Dichtungsring (O-Ring) wird dadurch der Kanal zuverlässig gegenüber dem Aluminium-Grundkörper abgedichtet.

Ein bevorzugtes Ausführungsbeispiel der Erfindung ist in der Zeichnung schematisch dargestellt und wird nachfolgend mit Bezug zur Zeichnung näher erläutert. Die Erläuterung bezieht sich auf einen Grundkörper eines Laserschweißkopfes. Es ist aber auch denkbar, die Erfindung bei ähnlichen Komponenten einer Laserbearbeitungsmaschine einzusetzen. Es zeigt:
- **Figur 1**: eine perspektivische Darstellung einer Laserbearbeitungsmaschine zum Laserschweißen;
- **Figur 2**: eine perspektivische Darstellung eines Laserschweißkopfes der Laserbearbeitungsmaschine nach Figur 1;
- **Figur 3**: einen Längsschnitt des Laserschweißkopfes nach Figur 2 nach Linie III-III;
- **Figur 4**: eine perspektivische Darstellung eines Grundkörpers des Laserschweißkopfes nach Figur 2;
- **Figur 5**: einen Längsschnitt des Grundkörpers nach Figur 4 nach Linie V-V;
- **Figur 6**: einen weiteren Längsschnitt des Grundkörpers nach Figur 4 nach Linie VI-VI;
- **Figur 7**: eine Darstellung der Abfolge wesentlicher erfindungsgemäßer Verfahrensschritte zur Herstellung eines Korrosionsschutzes der Kanäle in dem Grundkörper nach Figur 4.

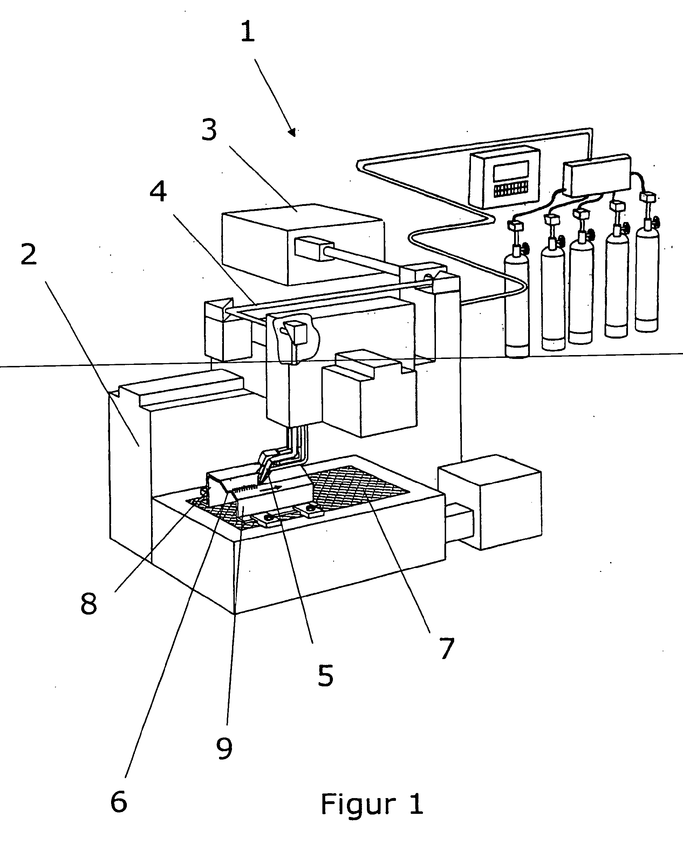

Aus der **Figur 1** ist der Aufbau einer Laserbearbeitungsmaschine **1** zum Laserschweißen ersichtlich. Ein Maschinenrahmen **2** trägt die Bewegungseinheit der Maschine und das Strahlführungssystem mit Umlenkspiegeln für einen in dem Laser **3** erzeugten Laserstrahl **4**.

Ein Laserschweißkopf **5** mit einem Umlenkspiegel und einem Fokussierspiegel ist über zwei Drehachsen und in drei Richtungen bewegbar, um eine Schweißnaht **6** zum Fügen zweier auf einer Auflage **7** angeordneter Bauteile **8** und **9** optimal bearbeiten zu können. Die Bauteile 8 und 9 werden mithilfe einer Spannvorrichtung fixiert. Zum Laserschweißen können dem Laserschweißkopf 5 Prozessgase, wie Arbeitgase oder Schutzgase (Helium, Argon, Kohlendioxid, Sauerstoff, Stickstoff), zugeführt und über eine Absaugeinrichtung abgesaugt werden.

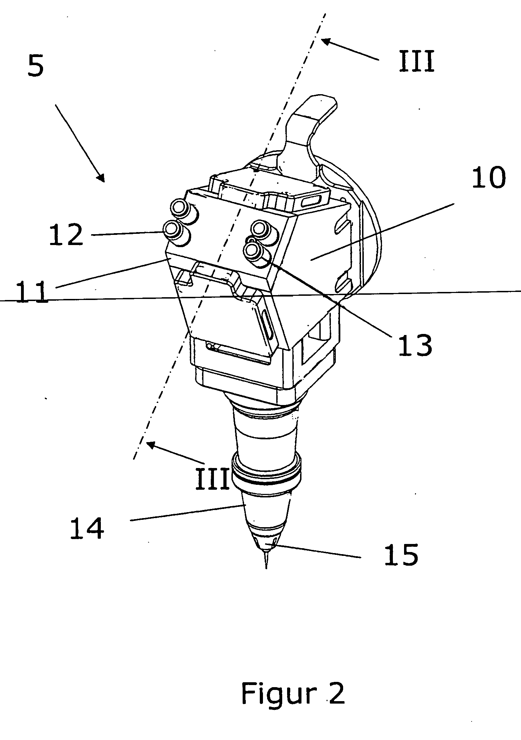

**Figur 2** betrifft den Aufbau des Laserschweißkopfes 5. Der Aufbau des Laserschweißkopf 5 soll hier nicht detailliert beschrieben werden, weil dieser an sich bekannt und nicht Gegenstand der Erfindung ist. An einem Grundkörper **10** sind Spiegel zur Umlenkung und Fokussierung des Laserstrahls befestigt. Zur Kühlung der Spiegel sind in den Grundkörper 10 Kanäle für eine Kühlflüssigkeit eingearbeitet. Daher schließt sich an den Grundkörper 10 ein Verteilerblock **11** an, an dem entsprechende Anschlüsse **12** und **13** für einen Einlass und einen Auslass der Kühlflüssigkeit vorgesehen sind. Weiterhin umfasst der Laserschweißkopf 5 ein Düsenrohr **14** und eine Düse **15**.

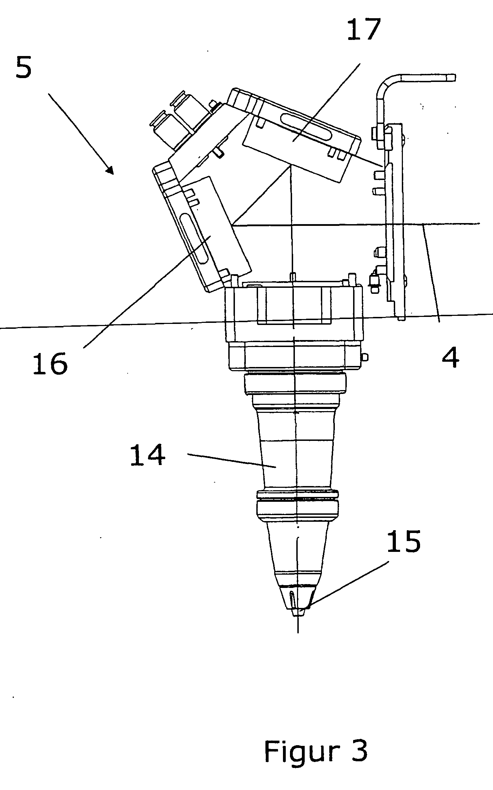

**Figur 3** veranschaulicht zum einen den Strahlengang des Laserstrahls 4 in dem Laserschweißkopf 5 und zeigt zum anderen einen Umlenkspiegel **16** und einen Fokussierspiegel **17** an dem Grundkörper 10, welche der Kühlung bedürfen. Auch Düse 15 und/oder Düsenrohr 14 können gekühlt werden, damit das Schutzgas nicht zu stark erwärmt wird (das stört den Prozess) und um den Verschleiß der Düse 15 zu reduzieren. Die zur Kühlung des Grundkörpers 10 und der Düse 15 und des Düsenrohrs 14 ausgebildeten Kanäle sind in den jeweiligen Bauteilen geführt und der Übersichtlichkeit halber nicht eingezeichnet.

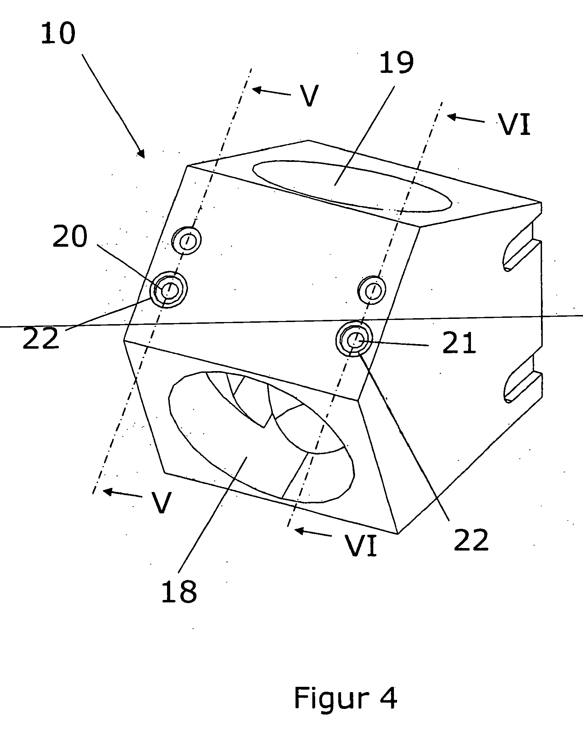

**Figur 4** zeigt den aus dem Laserschweißkopf ausgebauten Grundkörper 10 aus Aluminium. Im Wesentlichen umfasst der Grundkörper 10 zwei Aufnahmen **18** und **19** für den Umlenkspiegel und den Fokussierspiegel sowie die Kanäle **20** und **21** für die Kühlflüssigkeit. Zum Schutz vor Korrosion sind die Kanäle 20 und 21 mit einer Kunststoffbeschichtung **22** versehen.

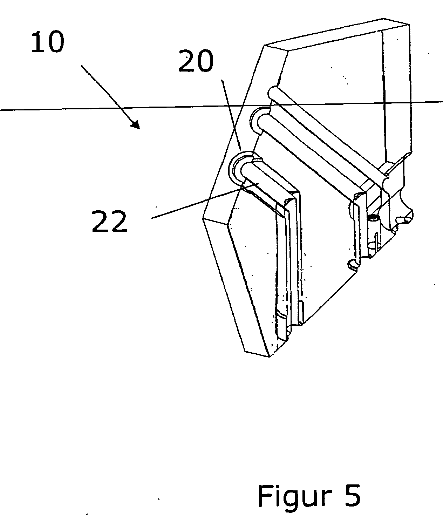

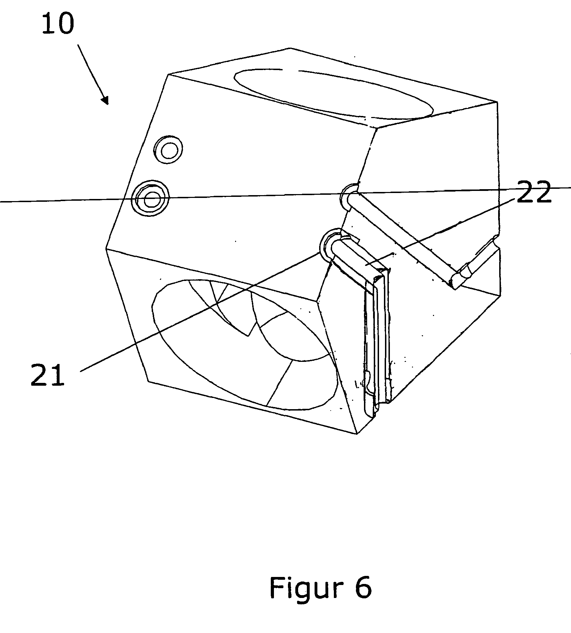

Gemäß den **Figuren 5** und **6** sind die Kanäle 20 und 21 gleich ausgebildet. Die Innenseite der Kanäle 20 und 21 ist durch die Kunststoffbeschichtung 22 abgedeckt.

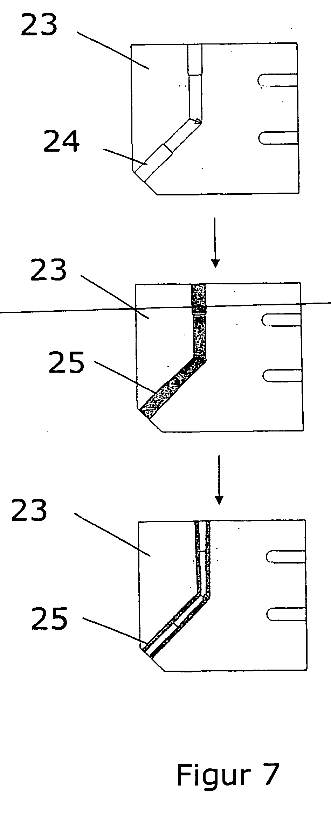

Bei einem Verfahren zur Herstellung eines Korrosionsschutzes der Kanäle in dem Grundkörper wird gemäß Figur 7 von einem Rohling 23 aus Aluminium für den Grundkörper ausgegangen. Zunächst wird ein Kanal 24 in größerer Dimension in den Rohling 23 eingebracht. Die Dimension richtet sich nach der erforderlichen Wandstärke der späteren Beschichtung. Anschließend wird der Kanal 24 mit einem Polymer 25, wie beispielsweise Epoxydharz, ausgegossen. Zur Vermeidung von Blasen wird das Polymer 25 vor und/oder nach dem Gießen kurzzeitig einem Vakuum ausgesetzt. Alternativ dazu kann der Grundkörper im Vakuum ausgegossen werden. Das gewährleistet, dass auch kleinste Hohlräume, z.B. Hinterschneidungen, blasenfrei ausgegossen werden. Eine Aushärtung des Polymers 25 kann kalt oder warm erfolgen. Im ausgehärteten Zustand kann das Polymer 25 spanend bearbeitet werden. Der Kanal kann in den erforderlichen Abmessungen ausgearbeitet werden.

Stufenförmige Absätze oder Senkungen können an der Bauteiloberfläche eine korrosionsbeständige Dichtfläche erzeugen, auf der handelsübliche O-Ringe eingesetzt werden, mit denen die Kanäle gegenüber dem umgebenden Bauteil abgedichtet werden.

Alternativ kann das Polymer 25 auch durch ein Schleudergussverfahren aufgebracht werden.

### BEZUGSZEICHENLISTE

- 1: Laserbearbeitungsmaschine
- 2: Maschinenrahmen
- 3: Laser
- 4: Laserstrahl
- 5: Laserbearbeitungskopf
- 6: Schweißnaht
- 7: Auflage
- 8: Bauteil
- 9: Bauteil
- 10: Grundkörper
- 11: Verteilerblock
- 12: Anschluss
- 13: Anschluss
- 14: Düsenrohr
- 15: Düse
- 16: Umlenkspiegel
- 17: Fokussierspiegel
- 18: Aufnahme
- 19: Aufnahme
- 20: Kanal
- 21: Kanal
- 22: Kunststoffbeschichtung
- 23: Rohling
- 24: Kanal
- 25: Polymer

## Patentansprüche

1. Verfahren zur Herstellung einer Kunststoffbeschichtung eines Kanals (20,21) eines Bauteils (5) einer Laserbearbeitungsmaschine, umfassend folgende Verfahrensschritte:
i) Ausbildung eines Kanals (24) einer ersten Dimension in einem aus Aluminium bestehenden Grundkörper (23) des Bauteils (5);
ii) Ausfüllen des Kanals (24) mit einem korrosionsbeständigen Kunststoff (25);
iii) Ausarbeiten eines Kanals (24) einer zweiten Dimension in den ausgehärteten Kunststoff (25) durch spanende Bearbeitung, wobei die zweite Dimension kleiner als die erste Dimension ist.

2. Verfahren nach Anspruch 1, **dadurch gekennzeichnet, dass** der ausgefüllte Kanal (24) vor dem Aushärten einem Vakuum ausgesetzt wird.

3. Verfahren nach Anspruch 1 oder 2, **dadurch gekennzeichnet, dass** die Aushärtung warm oder kalt erfolgt.

4. Verfahren nach einem der vorhergehenden Ansprüche, **dadurch gekennzeichnet, dass** der Kanal (24) mit dem Kunststoff, insbesondere einem Polymer oder Epoxydharz, ausgegossen wird.

5. Verfahren nach einem der vorhergehenden Ansprüche, **dadurch gekennzeichnet, dass** der Werkstoff (25) vor und/oder nach dem Gießen kurzzeitig einem Vakuum ausgesetzt wird.

6. Bauteil (5) einer Laserbearbeitungsmaschine, insbesondere Laserbearbeitungskopf (5), umfassend einen Grundkörper (10) aus Aluminium, in dem ein Kanal (20, 21) zur Leitung von kupferionisiertem Wasser ausgebildet ist, wobei der Kanal (20, 21) eine korrosionsbeständige Kunststoffbeschichtung (22) aufweist, die durch ein Verfahren nach einem der vorhergehenden Ansprüche hergestellt ist.

## Claims

1. Method for producing a plastic coating of a channel (20, 21) of a component (5) of a laser processing machine,
comprising the following method steps:
i) forming a channel (24) of a first dimension in a base member (23), which consists of aluminium, of the component (5);
ii) filling the channel (24) with a corrosion-resistant plastic material (25);
iii) forming a channel (24) of a second dimension in the hardened plastic material (25) by machining, wherein the second dimension is smaller than the first dimension.

2. Method according to claim 1, **characterized in that** the filled channel (24) is subjected to a vacuum prior to hardening.

3. Method according to claim 1 or 2, **characterized in that** the hardening is carried out in the warm or cold state.

4. Method according to any one of the preceding claims, **characterized in that** the plastic material, in particular a polymer or epoxy resin, is poured into the channel (24).

5. Method according to any one of the preceding claims, **characterized in that** the material (25) is subjected to a vacuum for a short time prior to and/or after the casting operation.

6. Component (5) of a laser processing machine, in particular, a laser processing head (5), comprising a base member (10) of aluminium, in which a channel (20, 21) is formed for guiding copper-ionized water, wherein the channel (20, 21) has a corrosion-resistant plastic coating (22) which is produced by a method according to any one of the preceding claims.

## Revendications

1. Procédé de fabrication d'un revêtement en matière plastique d'un canal (20, 21) d'un composant (5) d'une machine d'usinage au laser, comprenant les étapes suivantes :
i) formation d'un canal (24) d'une première dimension dans un corps de base (23) en aluminium du composant (5) ;
ii) remplissage du canal (24) avec une matière plastique (25) résistante à la corrosion ;
iii) réalisation d'un canal (24) d'une deuxième dimension dans la matière plastique (25) durcie par usinage par enlèvement de copeaux, la deuxième dimension étant plus petite que la première dimension.

2. Procédé selon la revendication 1, **caractérisé en ce que** le canal (24) rempli est exposé à un vide avant le durcissement.

3. Procédé selon la revendication 1 ou 2, **caractérisé en ce que** le durcissement est réalisé à chaud ou à froid.

4. Procédé selon une des revendications précédentes, **caractérisé en ce que** la matière plastique, en particulier un polymère ou une résine époxy, est coulée dans le canal (24).

5. Procédé selon une des revendications précédentes, **caractérisé en ce que** le matériau (25) est temporairement exposé à un vide avant et/ou après la coulée.

6. Composant (5) d'une machine d'usinage au laser, en particulier tête d'usinage au laser (5), comprenant un corps de base (10) en aluminium dans lequel est formé un canal (20, 21) destiné à conduire de l'eau ionisée au cuivre, le canal (20, 21) présentant un revêtement en matière plastique (22) résistant à la corrosion qui est fabriqué par un procédé selon une des revendications précédentes.
